# EUROPÄISCHE PATENTSCHRIFT

(11) **EP 2 368 760 B1**
(45) Veröffentlichungstag und Bekanntmachung des Hinweises auf die Patenterteilung: **06.07.2016**
(21) Anmeldenummer: 11001399.2
(22) Anmeldetag: 21.02.2011
(51) Int. Cl.: B60Q 1/26, B60R 9/04

(54) **Träger für eine Sondersignalanlage für einen Dach eines Kraftfahrzeugs**
Carrier for a special signalling device for a roof of a motor vehicle
Embase pour un dispositif de signalisation spéciale pour un toit de véhicule automobile

(30) Priorität: 11.03.2010 DE 102010011042
(43) Veröffentlichungstag der Anmeldung: 28.09.2011
(73) Patentinhaber: KAMEI automotive GmbH, 38448 Wolfsburg (DE)
(72) Erfinder: Schulze, Dirk, 29378 Wittingen (DE)
(74) Vertreter: Friedrich, Andreas

(56) Entgegenhaltungen:
- EP-A1- 0 249 012
- DE-A1- 19 716 552
- DE-U1-202006 000 974

## Beschreibung

Die Erfindung betrifft einen Träger für eine Sondersignalanlage für ein Dach eines Kraftfahrzeuges mit einem Außenbauteil aus einem Kunststoff.

Derartige Dachaufsätze werden beispielsweise als Träger für Sondersignalanlagen auf Einsatzfahrzeugen von Polizei, Feuerwehr oder anderen Rettungskräften eingesetzt. Dazu werden sie auf dem Dach des jeweiligen Einsatzfahrzeuges montiert. Herkömmlicherweise wird in dem Außenbauteil aus einem Kunststoff, das die Außenform des Dachaufsatzes bestimmt und somit für seine aerodynamischen Eigenschaften verantwortlich ist, ein Füllteil aus einem Kunststoffschaum angeordnet. Dabei füllt das Füllteil das Außenbauteil im Wesentlichen vollständig aus. Die Unterseite, die bei der Verwendung als Dachaufsatz dem Kraftfahrzeugdach zugewandt ist, wird dabei der Form des jeweiligen Daches entsprechend ausgebildet.

Gattungsgemäße Dachaufsätze müssen insbesondere für Einsatzfahrzeuge neben ihrer aerodynamischen Form auch sicherheitsrelevante Anforderungen erfüllen. Insbesondere im Falle eines Unfalls des Einsatzfahrzeuges, beispielsweise bei einem Überschlag, muss gewährleistet sein, dass sich der Dachaufsatz nicht in die Fahrgastzelle eindrückt, sondern im Wesentlichen formstabil auf dem Dach des Einsatzfahrzeuges verbleibt.

Nachteilig bei herkömmlichen Dachaufsätzen ist, dass durch die Verwendung eines Kunststoffteils, das mit einem geschäumten Füllteil ausgefüllt wird, keine besonders gute Formstabilität und Verwindungssteifigkeit erreicht wird und zudem die Stärke der Verbindung zum Dach des jeweiligen Kraftfahrzeuges nicht optimal ist.

Aus der DE 10 2007 042 504 A1 ist ein Warnbalken für Einsatzfahrzeuge bekannt, der über eine Grundplatte verfügt, die über wenigstens eine Klemmeinrichtung kraft- und formschlüssig an einer Dachreling eines Fahrzeugs zu befestigen ist.

Aus der DE 20 2006 000 974 U1 ist eine gattungsgemäße Haltevorrichtung für Warnvorrichtungen auf Dächern von Einsatzfahrzeugen bekannt, bei dem der Dachaufsatz zumindest abschnittsweise als Schaumteil ausgebildet ist. Dadurch soll eine gute Schalldämmung zwischen der Warnvorrichtung und dem Innenraum des Einsatzfahrzeuges erreicht werden. Auch diese Haltevorrichtung ist über Klemmbacken an einer Dachreling des Kraftfahrzeuges befestigbar.

Die US 4,934,752 offenbart eine Haltevorrichtung für Warnvorrichtungen, bei der eine Halteplatte in eine Schiebedachausnehmung des Kraftfahrzeuges eingesetzt wird. An diese Halteplatte wird anschließend die eigentliche Warnvorrichtung montiert.

Aus der DE 197 16 552 A1 ist eine Aufbaueinrichtung für Warn- und Signalmittel eines Sonderfahrzeugs bekannt, die in eine Schiebedachöffnung des Kraftfahrzeugs einsetzbar ist.

Der Erfindung liegt daher die Aufgabe zugrunde, einen Dachaufsatz für ein Kraftfahrzeug derart weiterzuentwickeln, dass eine erhöhte Formstabilität erreicht wird und der Dachaufsatz zudem einfach, sicher und fest am Kraftfahrzeug befestigbar ist.

Die Erfindung löst die gestellte Aufgabe durch einen Träger für eine Sondersignalanlage für ein Dach eines Kraftfahrzeugs mit einem Außenbauteil aus einem Kunststoff und einem Innenbauteil aus einem Kunststoff, wobei zwischen dem Innenbauteil und dem Außenbauteil eine Halteplatte aus Metall angeordnet ist.

Durch die Verwendung eines Innenbauteils und eines Außenbauteils aus einem

Kunststoff, die leicht herstellbar sind, und einer zwischen diesen beiden Kunststoffbauteilen angeordneten Halteplatte wird zunächst eine einfache, schnelle und kostengünstige Herstellung des erfindungsgemäßen Dachaufsatzes gewährleistet. Die zwischen den beiden leichten Kunststoffbauteilen angeordnete Halteplatte aus Metall sorgt für eine große Formstabilität und Verwindungssteifigkeit, was insbesondere im Falle eines Unfalls eines mit einem erfindungsgemäßen Dachaufsatz ausgerüsteten Kraftfahrzeugs von Vorteil ist. Ein erfindungsgemäßer Dachaufsatz ist folglich robust und haltbar und hat dennoch ein sehr geringes Eigengewicht. Zudem wird durch die Verwendung der Halteplatte aus Metall gewährleistet, dass der erfindungsgemäße Dachaufsatz stabil und fest am Kraftfahrzeug angeordnet werden kann.

Das Außenbauteil verfügt vorteilhafterweise über ein erstes Dichtelement, das im montierten Zustand des Dachaufsatzes den Dachaufsatz gegen ein Dach des Kraftfahrzeugs abdichtet. Auf diese Weise ist gewährleistet, dass keine Flüssigkeit, beispielsweise Wasser, zwischen den Dachaufsatz und das Dach des Fahrzeugs gelangt. Insbesondere die Halteplatte aus Metall ist dadurch zusätzlich zu einer gegebenenfalls vorhandenen Korrosionsschutzbeschichtung vor dem schädlichen Einfluss von Feuchtigkeit geschützt.

Das erste Dichtelement ist dazu an der Unterseite des Dachaufsatzes, vorzugsweise um den Rand des Dachaufsatzes vollständig umlaufend angeordnet. Es kann am Innen- oder Außenbauteil angeordnet sein. Vorteilhafterweise ist das erste Dichtelement am unteren Rand des Außenbauteils angeordnet, der insbesondere nach unten den unteren Rand des Innenbauteils überragt. So ist durch das erste Dichtelement zudem gewährleistet, dass auch keine Feuchtigkeit zwischen das Außen- und das Innenbauteil gelangen kann.

In einer bevorzugten Ausführungsform weist die Halteplatte ein Lochbild auf, das Löcher für eine Montage und eine Verkabelung von Sondersignalanlagen vorsieht, die auf dem Dachaufsatz montierbar sind. Für die Montage verschiedener Sondersignalanlagen verschiedener Hersteller werden verschiedene Lochmuster in der Halteplatte benötigt, da insbesondere die Befestigungselemente, über die die Sondersignalanlage auf dem Dachaufsatz befestigbar ist, und die Position der durchzuführenden Kabel von Hersteller zu Hersteller variiert. Durch ein Lochbild in der Halteplatte, das eine Kombination verschiedener Lochbilder einzelner Hersteller ist, ist gewährleistet, dass ein gattungsgemäßer Dachaufsatz für die Verwendung verschiedener Sondersignalanlagen verwendbar ist, ohne dass eine andere Halteplatte verwendet werden muss. Dadurch wird der Dachaufsatz sehr flexibel verwendbar und es müssen weniger verschiedene Halteplatten bevorratet werden.

Das Innenbauteil aus Kunststoff weist vorteilhafterweise eine Verrippung auf. Dadurch kann die Verwindungssteifigkeit und Formstabilität auf einfache Weise weiter erhöht werden, ohne dass dadurch das Gewicht des Dachaufsatzes zu sehr erhöht wird.

Das Innenbauteil und das Außenbauteil sind miteinander insbesondere über Ultraschweißung verbunden. Dadurch sind keine weiteren Befestigungselemente und Zwischenbauteile notwendig, um Innenbauteil und Außenbauteil miteinander zu verbinden, wodurch zum einen die Herstellung vereinfacht wird und zum anderen die Reparaturanfälligkeit des Dachaufsatzes reduziert wird, da zusätzliche Befestigungselemente als Fehlerquelle nicht auftauchen. Alternativ können beide Teile auch miteinander verklebt oder formschlüssig, etwa durch Clips oder Schrauben, miteinander verbunden werden. Auch andere Arten der Verbindung sind denkbar.

Vorteilhafterweise ist die Halteplatte an einer Dachreling des Kraftfahrzeugs befestigbar. Die Befestigung erfolgt dabei insbesondere durch an der Dachreling befestigbare Klemmbacken, an denen die Halteplatte montierbar ist. Derartige Klemmbacken sind beispielsweise in der Patentanmeldung DE 10 2009 022 245 beschrieben. Es können beispielsweise zwei Klemmbacken pro Reling vorgesehen sein, an denen die Halteplatte des Dachaufsatzes befestigbar ist. Werden diese Klemmbacken beispielsweise über eine Klemmplatte miteinander verbunden, ist gewährleistet, dass diese immer den richtigen Abstand voneinander haben, so dass der Dachaufsatz einfach und sicher an der Reling befestigbar ist.

Weist das Kraftfahrzeug eine Schiebedachausnehmung auf, kann der Dachaufsatz auch eine Trägerplatte aufweisen, die in diese Schiebedachausnehmung des Kraftfahrzeugs einsetzbar ist und an der die Halteplatte montierbar ist. Dadurch ist gewährleistet, dass die Befestigung zwischen Dachaufsatz und Kraftfahrzeug noch stabiler ist, da sie nicht nur an den seitlichen Rändern des Dachaufsatzes erfolgt, wie dies der Fall ist, wenn der Dachaufsatz an der Dachreling befestigbar ist, sondern entlang des gesamten Randes der Schiebedachausnehmung. Jedoch ist die Montage des Dachaufsatzes in diesem Fall etwas komplizierter, da der Dachaufsatz in die Schiebedachausnehmung des Kraftfahrzeugs einzusetzen ist.

Das zweite Dichtelement ist dazu an der Unterseite des Innenbauteils angeordnet und läuft vorzugsweise um den Rand der für die Schiebedachausnehmung vorgesehenen Öffnung im Innenbauteil vollumfänglich herum. Das Innenbauteil kann zu diesem Zweck vorzugsweise nur als ein Rahmenelement ausgebildet sein, das eine großflächige Öffnung aufweist, um die das zweite Dichtelement umläuft.

Das Innenbauteil verfügt vorteilhafterweise über ein zweites Dichtelement, das im montierten Zustand des Dachaufsatzes den Dachaufsatz gegen die Schiebedachausnehmung abdichtet. Dadurch ist gewährleistet, dass Feuchtigkeit, die im montierten Zustand des Dachaufsatzes zwischen den Dachaufsatz und das Kraftfahrzeugdach gelangt, nicht durch die Schiebedachausnehmung des Kraftfahrzeugs in den Kraftfahrzeuginnenraum gelangen kann.

Ein Verfahren zum Herstellen einer Trägerplatte für einen Dachaufsatz, der in eine Schiebedachausnehmung eingesetzt werden kann, kann beispielsweise umfassen, dass die Trägerplatte im Laser-Kant-Verfahren hergestellt wird. Bei diesem Verfahren wird zunächst die Form der Trägerplatte aus einer Platte mittels eines Lasers herausgeschnitten und anschließend an den gewünschten Stellen abgekantet. Auf diese Weise ist eine einfache und kostengünstige Herstellung der Trägerplatte gewährleistet. Durch die Verwendung einer Trägerplatte, die in die Schiebedachausnehmung des Kraftfahrzeugs eingesetzt wird, ist nicht nur gewährleistet, dass die daran befestigte Halteplatte großflächig montiert werden kann, sondern dass zudem auch die Trägerplatte entlang des ganzen Randes der Schiebedachausnehmung befestigbar ist. Insbesondere kann die Trägerplatte nicht nur an den Seiten, sondern auch im vorderen und hinteren Bereich am Dach des Kraftfahrzeugs befestigt werden. Dadurch wird die Verbindung zwischen dem Dach des Kraftfahrzeuges und der Trägerplatte und damit dem Dachaufsatz insbesondere gegen ein Verrutschen in oder gegen die Fahrtrichtung deutlich erhöht. Eine derartige Trägerplatte kann mit dem erfindungsgemäßen Verfahren in einfacher und kostengünstiger Weise einstückig hergestellt werden, ohne dass zusätzliche Schweißarbeiten notwendig sind.

Durch die Verwendung einer derartigen Trägerplatte wird durch deren besondere Stabilität die Sicherheit, insbesondere in Unfall- und Überschlags-(Rollover) Situationen, deutlich erhöht.

Auch in der Trägerplatte ist ein Lochmuster vorgesehen, durch das nicht nur alle Kabel für auf den Dachaufsatz aufsetzbare Sondersignalanlagen geführt werden können, sondern das auch Ausnehmungen für Befestigungselemente aufweist, mit denen die Halteplatte an der Trägerplatte montiert wird.

Mit Hilfe einer Zeichnung werden im Folgenden verschiedene Ausführungsbeispiele der vorliegenden Erfindung näher erläutert. Es zeigen:
- Figur 1: - einen Dachaufsatz gemäß einem ersten Ausführungsbeispiel der vorliegenden Erfindung im montierten Zustand mit einer darauf angeordneten Sondersignalanlage,
- Figur 2: - eine Explosionszeichnung der Situation aus Figur 1,
- Figur 3: - eine Ansicht der Unterseite des Dachaufsatzes aus Figur 1,
- Figur 4: - einen Dachaufsatz gemäß einem zweiten Ausführungsbeispiel der vorliegenden Erfindung im montierten Zustand mit einer darauf angeordneten Sondersignalanlage,
- Figur 5: - eine Explosionszeichnung der Situation aus Figur 4,
- Figur 6: - eine Unterseitenansicht des Dachaufsatzes aus Figur 4 und
- Figur 7: - eine in einer Schiebedachausnehmung angeordnete Trägerplatte.

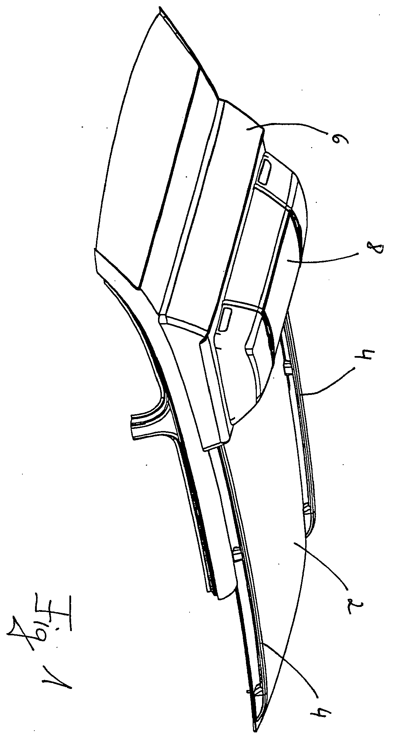

In Figur 1 ist ein Kraftfahrzeugdach 2 gezeigt, an dem zwei Relings 4 angeordnet sind. Im vorderen Teil dieser Relings 4 ist ein Dachaufsatz gemäß einem ersten Ausführungsbeispiel der vorliegenden Erfindung angeordnet, der über ein Außenbauteil 6 aus einem Kunststoff verfügt, das für die aerodynamische Form des Dachaufsatzes verantwortlich ist. Im in Figur 1 gezeigten Ausführungsbeispiel ist der Dachaufsatz an den Relings 4 des Kraftfahrzeugs befestigt. Das Außenbauteil 6 weist ein in Figur 1 nicht gezeigtes erstes Dichtelement auf, mit dem der Dachaufsatz gegen das Kraftfahrzeugdach 2 abgedichtet ist. Auf diese Weise ist gewährleistet, dass kein Wasser in das Innere des Dachaufsatzes gelangen kann. Auf dem Außenbauteil 6 befindet sich in dem in Figur 1 gezeigten Ausführungsbeispiel eine Sondersignalanlage 8.

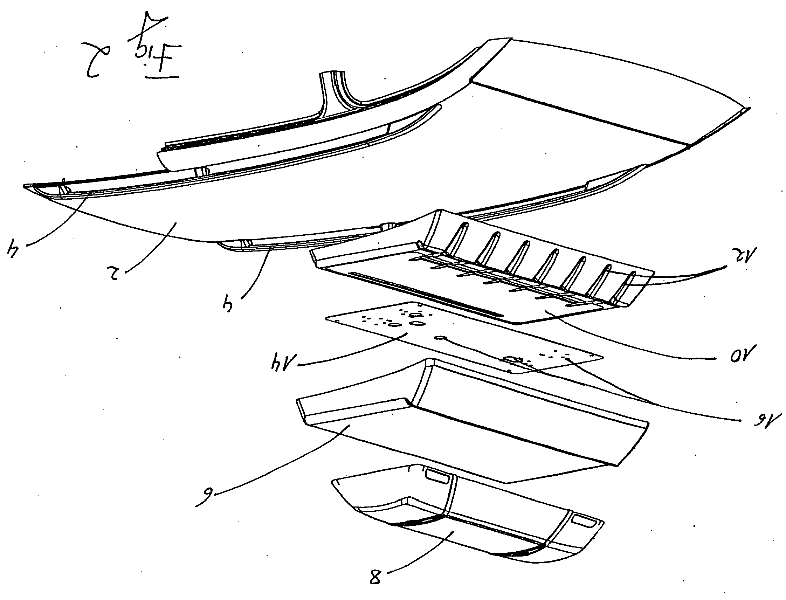

Figur 2 zeigt eine Explosionszeichnung der Situation aus Figur 1. Auch hier befinden sich am Kraftfahrzeugdach 2 zwei Relings 4, an denen der Dachaufsatz befestigbar ist. Der Dachaufsatz weist ein Innenbauteil 10 aus einem Kunststoff auf, das im in Figur 2 gezeigten Ausführungsbeispiel im vorderen Bereich über eine Verrippung 12 verfügt. Dadurch wird die Formstabilität und Verwindungssteifigkeit des Innenbauteils 10 deutlich erhöht. Der in Figur 2 gezeigte Dachaufsatz weist zudem ein Außenbauteil 6 auf, das die aerodynamische Form des Dachaufsatzes bestimmt. Zwischen dem Außenbauteil 6 und dem Innenbauteil 10 ist eine Halteplatte 14 angeordnet. Diese besteht aus Metall und sorgt für eine deutliche Erhöhung der Formstabilität und Verwindungssteifigkeit des Dachaufsatzes. Auf dem Außenbauteil 6 ist eine Sondersignalanlage 8 angeordnet. An der Halteplatte 14 werden sowohl die in Figur 2 nicht gezeigten Klemmbacken zur Befestigung des Dachaufsatzes an den Relings 4 des Kraftfahrzeuges als auch die ebenfalls nicht gezeigten Halteelemente der Sondersignalanlage 8 befestigt. Zudem müssen durch die Halteplatte 14 auch für die Sondersignalanlage benötigte Kabel hindurch geführt werden. Dafür weist die Halteplatte 14 ein Lochbild 16 auf. Dieses Lochbild 16 ist insbesondere nicht nur für die verwendete Sondersignalanlage 8 geeignet, sondern auch für Sondersignalanlagen anderer Hersteller, die Löcher an anderen Stellen des Dachaufsatzes benötigen. Wie in Figur 2 gezeigt, weisen das Innenbauteil 10 und das Außenbauteil 6 werkseitig kein Lochbild auf. Die für die jeweilige Sondersignalanlage 8 benötigten Löcher können einfach durch das Innenbauteil 10 und das Außenbauteil 6 hindurch gebohrt werden. Die Position der Löcher wird durch die jeweiligen Löcher im Lochbild 16 der Halteplatte 14 bestimmt. Auf diese Weise ist eine flexible Einsetzbarkeit des Dachaufsatzes für verschiedene Sondersignalanlagen 8 verschiedener Hersteller gewährleistet.

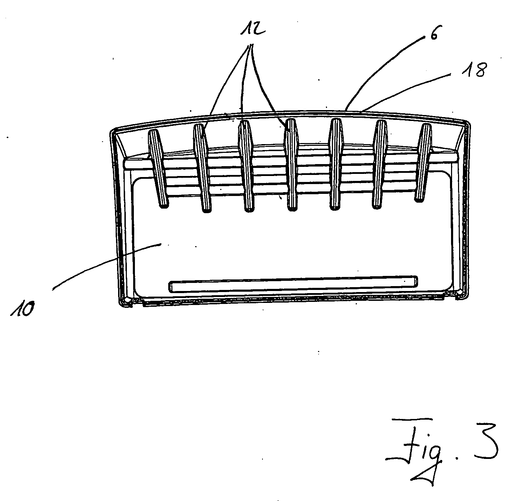

Figur 3 zeigt eine Ansicht einer Unterseite des Dachaufsatzes aus den Figuren 1 und 2. Das Innenbauteil 10 weist an einer Seite eine Verrippung 12 auf, durch die die Formstabilität des Dachaufsatzes verstärkt wird. In einer in Figur 3 gezeigten Ansicht von unten ist naturgemäß vom Außenbauteil 6 nur ein geringer Rand zu sehen. Zwischen dem Außenbauteil 6 und dem Innenbauteil 10 ist in Figur 3 ein erstes Dichtelement 18 gezeigt, das im montierten Zustand des Dachaufsatzes den Dachaufsatz gegen das Dach des Kraftfahrzeugs abdichtet.

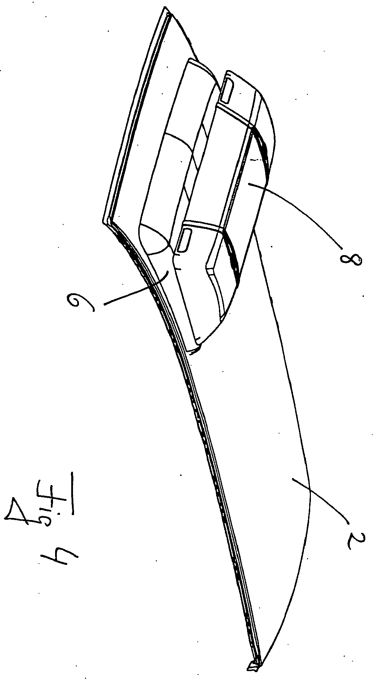

Figur 4 zeigt einen Dachaufsatz gemäß einem zweiten Ausführungsbeispiel der vorliegenden Erfindung im montierten Zustand. Das Kraftfahrzeugdach 2 weist in dem in Figur 4 gezeigten Ausführungsbeispiel keine Reling auf, so dass der Dachaufsatz in eine in Figur 4 nicht gezeigte Schiebedachausnehmung 20 des Kraftfahrzeugdaches eingesetzt wird.

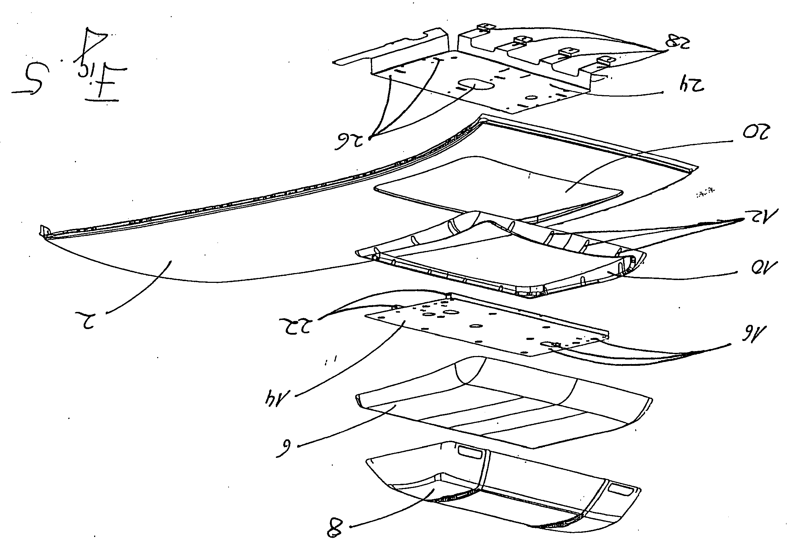

Figur 5 zeigt eine Explosionsdarstellung der Situation aus Figur 4. Das Innenbauteil 10 des in Figur 5 gezeigten Dachaufsatzes ist lediglich eine Rahmenstruktur. Am Dach 2 des Kraftfahrzeuges wird eine Trägerplatte 24 befestigt, an der die Halteplatte 14 montierbar ist. Die Trägerplatte 24 weist ein zweites Lochbild 26 auf, durch das ebenfalls alle für die Sondersignalanlage 8 benötigten Kabel geführt werden können. Zudem sind im zweiten Lochbild 26 auch Ausnehmungen für Befestigungselemente vorgesehen, mit denen die Halteplatte 14 an der Trägerplatte 24 befestigbar ist. Im vorderen Bereich weist die in Figur 5 gezeigte Trägerplatte 24 vier Laschen 28 auf, mit denen die Trägerplatte 24 im vorderen Bereich des Kraftfahrzeugdachs 2 befestigt werden kann. Dadurch wird insbesondere die Stabilität des Dachaufsatzes gegenüber Verrutschen in oder entgegen der Fahrtrichtung des Kraftfahrzeugs deutlich erhöht. Zudem wird durch die erhöhte Stabilität der Konstruktion der Trägerplatte ein hoher Sicherheitsfaktor, insbesondere in Unfall- und Überschlags- (Rollover) Situationen, gewährleistet. Die Halteplatte 14 weist wieder ein Lochbild 16 auf, das passende Ausnehmungen für die Befestigung der Sondersignalanlage 8 an der Halteplatte umfasst. Zudem sind Ausnehmungen für die Durchführung von Kabeln für die Sondersignalanlage 8 vorgesehen. In dem in Figur 5 gezeigten Ausführungsbeispiel sind an der Halteplatte 14 Stabilisierungselemente 22 vorgesehen, durch die die Verwindungssteifigkeit der Halteplatte 14 und damit des gesamten Dachaufsatzes erhöht wird. Die aerodynamische Form des Dachaufsatzes wird wieder durch das Außenbauteil 6 bestimmt.

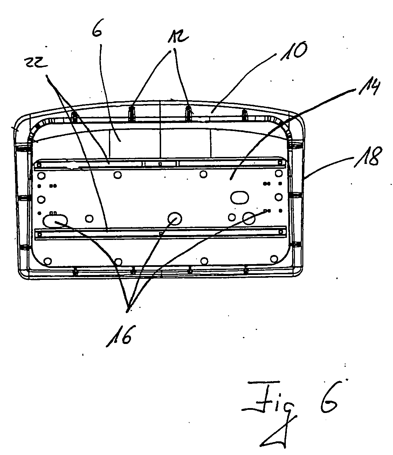

Figur 6 zeigt eine Ansicht von unten auf einen Dachaufsatz, wie er in den Figuren 4 und 5 gezeigt ist. Zu erkennen ist das rahmenförmige Innenbauteil 10, das in dem in Figur 6 gezeigten Ausführungsbeispiel über eine Verrippung 12 verfügt, die jedoch deutlich kleiner als beispielsweise in dem in Figur 3 gezeigten Ausführungsbeispiel ausfällt. Innerhalb des durch das Innenbauteil 10 gebildeten Rahmens ist die Halteplatte 14 mit ihrem Lochbild 16 zu erkennen. Auch die beiden Stabilisierungselemente 22, durch die die Verwindungssteifigkeit des Dachaufsatzes erhöht wird, sind in Figur 6 gezeigt. Da die Halteplatte 14 in dem in Figur 6 gezeigten Ausführungsbeispiel nicht die gesamte vom Dachaufsatz eingenommene Fläche abdeckt, ist auch ein Teil des Außenbauteils 6 von der Unterseite des Dachaufsatzes her zu sehen. Durch die relativ klein ausgebildete Halteplatte 14 wird das Gewicht des Dachaufsatzes reduziert. Um die damit einhergehende Verringerung der Formstabilität und Verwindungssteifigkeit des Dachaufsatzes auszugleichen, sind in dem in Figur 6 gezeigten Ausführungsbeispiel die Stabilisierungselemente 22 der Halteplatte 14 und die Verrippung 12 des Innenbauteils 10 vorgesehen.

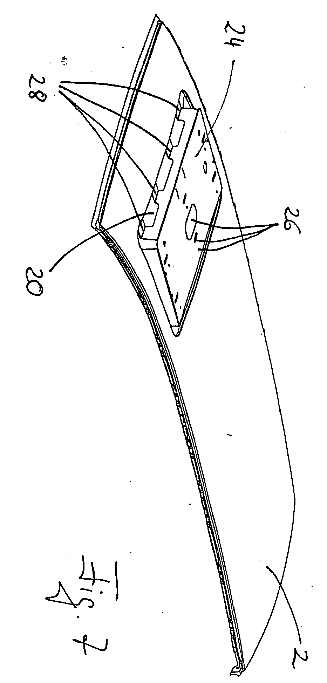

Figur 7 zeigt ein Kraftfahrzeugdach 2, in dessen Schiebedachausnehmung 20 eine Trägerplatte 24 eingesetzt ist. Dabei ist die Trägerplatte 24 nicht nur im seitlichen Bereich am Kraftfahrzeugdach 2 befestigt, sondern auch über die vier am vorderen Ende der Trägerplatte 24 angeordneten Laschen 28 mit dem Kraftfahrzeugdach 2 verbunden. Dies sorgt für eine sehr stabile Befestigung des Dachaufsatzes am Kraftfahrzeugdach 2. Die Trägerplatte 24 weist auch in Figur 7 ein zweites Lochbild 26 auf, durch das alle für auf dem Dach auch sonst angeordnete Sondersignalanlagen benötigten Kabel hindurchführbar sind. Zudem sind Ausnehmungen für Befestigungselemente, beispielsweise Schrauben oder Nieten, vorgesehen, durch die die Halteplatte 14 an der Trägerplatte 24 montiert werden kann.

### Bezugszeichenliste

- 2: Kraftfahrzeugdach
- 4: Reling
- 6: Außenbauteil
- 8: Sondersignalanlage
- 10: Innenbauteil
- 12: Verrippung
- 14: Halteplatte
- 16: Lochbild
- 18: Erstes Dichtelement
- 20: Schiebedachausnehmung
- 22: Stabilisierungselement
- 24: Trägerplatte
- 26: Zweites Lochbild
- 28: Lasche

## Patentansprüche

1. Träger für eine Sondersignalanlage für ein Dach eines Kraftfahrzeugs mit einem Außenbauteil (6) aus einem Kunststoff und einem Innenbauteil (10) aus einem Kunststoff, **dadurch gekennzeichnet, dass** zwischen dem Innenbauteil (10) und dem Außenbauteil (6) eine Halteplatte (14) aus Metall angeordnet ist,

2. Träger nach Anspruch 1, **dadurch gekennzeichnet, dass** das Außenbauteil (6) über ein erstes Dichtelement (18) verfügt, das im montierten Zustand des Dachaufsatzes den Dachaufsatz gegen ein Dach (2) des Kraftfahrzeugs abdichtet.

3. Träger nach Anspruch 1 oder 2, **dadurch gekennzeichnet, dass** die Halteplatte (14) ein Lochbild (16) aufweist, das Löcher für eine Montage und eine Verkabelung von Sondersignalanlagen (8) vorsieht, die auf dem Dachaufsatz montierbar sind,

4. Träger nach Anspruch 1, 2 oder 3, **dadurch gekennzeichnet, dass** das Innenbauteil (10) eine Verrippung (12) aufweist.

5. Träger nach einem der vorstehenden Ansprüche, **dadurch gekennzeichnet, dass** das Innenbauteil (10) und das Außenbauteil (6) miteinander verbunden sind.

6. Träger nach einem der vorstehenden Ansprüche, **dadurch gekennzeichnet, dass** die Halteplatte (14) an einer Dachreling (4) des Kraftfahrzeugs befestigbar ist.

7. Träger nach Anspruch 6, **dadurch gekennzeichnet, dass** die Befestigung durch an der Dachreling (4) befestigbare Klemmbacken erfolgt, an denen die Halteplatte (14) montierbar ist,

8. Träger nach einem der Ansprüche 1 bis 5, **dadurch gekennzeichnet, dass** der Dachaufsatz eine Trägerplatte (24) aufweist, die in eine Schiebedachausnehmung (20) des Kraftfahrzeugs einsetzbar ist und an der die Halteplatte (14) montierbar ist.

9. Träger nach Anspruch 8, **dadurch gekennzeichnet, dass** das Innenbauteil (10) über ein zweites Dichtelement verfügt, das im montierten Zustand des Dachaufsatzes den Dachaufsatz gegen die Schiebedachausnehmung (20) abdichtet.

## Claims

1. Carrier for a special signalling system for a roof of a motor vehicle, with an outer component (6) composed of a plastic and with an inner component (10) composed of a plastic, **characterized in that** a holding plate (14) made from metal is arranged between the inner component (10) and the outer component (6).

2. Carrier according to Claim 1, **characterized in that** the outer component (6) has a first sealing element (18) which, in the mounted state of the roof extension, seals off the roof extension from a roof (2) of the motor vehicle.

3. Carrier according to Claim 1 or 2, **characterized in that** the holding plate (14) has a hole pattern (16) which provides holes for installing and wiring special signalling systems (8) which are mountable on the roof extension.

4. Carrier according to Claim 1, 2 or 3, **characterized in that** the inner component (10) has a ribbed structure (12).

5. Carrier according to one of the preceding claims, **characterized in that** the inner component (10) and the outer component (6) are connected to each other.

6. Carrier according to one of the preceding claims, **characterized in that** the holding plate (14) is fastenable to a roof rail (4) of the motor vehicle.

7. Carrier according to Claim 6, **characterized in that** the fastening takes place by means of clamping jaws which are fastenable to the roof rail (4) and on which the holding plate (14) is mountable.

8. Carrier according to one of Claims 1 to 5, **characterized in that** the roof extension has a carrier plate (24) which is insertable into a sliding roof recess (20) of the motor vehicle and on which the holding plate (14) is mountable.

9. Carrier according to Claim 8, **characterized in that** the inner component (10) has a second sealing element which, in the mounted state of the roof extension, seals off the roof extension from the sliding roof recess (20).

## Revendications

1. Support pour une installation de signalisation spéciale pour un toit d'un véhicule automobile comprenant une partie constitutive extérieure (6) en une matière plastique et une partie constitutive intérieure (10) en une matière plastique, **caractérisé en ce qu'**une plaque de maintien (14) en métal est agencée entre la partie constitutive intérieure (10) et la partie constitutive extérieure (6).

2. Support selon la revendication 1, **caractérisé en ce que** la partie constitutive extérieure (6) dispose d'un premier élément d'étanchéité (18) qui, dans l'état monté de la monture de toiture, étanche la monture de toiture vis-à-vis d'un toit (2) du véhicule automobile.

3. Support selon la revendication 1 ou 2, **caractérisé en ce que** la plaque de maintien (14) comporte un motif de trous (16) qui prévoit des trous pour un montage et pour un câblage d'installations de signalisation spéciale (8) qui sont susceptibles d'être montées sur la monture de toiture.

4. Support selon la revendication 1, 2 ou 3, **caractérisé en ce que** la partie constitutive intérieure (10) comporte un nervurage (12).

5. Support selon l'une des revendications précédentes, **caractérisé en ce que** la partie constitutive intérieure (10) et la partie constitutive extérieure (6) sont reliées l'une avec l'autre.

6. Support selon l'une des revendications précédentes, **caractérisé en ce que** la plaque de maintien (14) est susceptible d'être fixée sur une barre de toiture (4) du véhicule automobile.

7. Support selon la revendication 6, **caractérisé en ce que** la fixation a lieu au moyen de mâchoires de serrage susceptibles d'être fixées sur la barre de toiture (4), et sur lesquelles la plaque de maintien (14) peut être montée.

8. Support selon l'une des revendications 1 à 5, **caractérisé en ce que** la monture de toiture comprend une plaque porteuse (24), qui peut être mise en place dans un évidement de toit coulissant (20) du véhicule automobile et sur laquelle la plaque de maintien (14) peut être montée.

9. Support selon la revendication 8, **caractérisé en ce que** la partie constitutive intérieure (10) dispose d'un second élément d'étanchéité qui, dans l'état monté de la monture de toiture, étanche la monture de toiture vis-à-vis de l'évidement de toit coulissant (20).
